# EUROPEAN PATENT APPLICATION

(11) **EP 4 576 006 A1**
(43) Date of publication of application: **25.06.2025**
(21) Application number: 23218884.7
(22) Date of filing: 20.12.2023
(51) Int. Cl.: G06V 10/25, G06V 10/82, G06V 20/40, G06V 20/17

(54) **OBJECT AND TRAJECTORY IDENTIFICATION**

(71) Applicant: ROSEMOUNT AEROSPACE INC., Burnsville, MN 55306-4898 (US)
(72) Inventor: PALOP, Hector, Cork, T12 EV79 (IE); YARLAPATI GANESH, Naresh, Cork, T12X295 (IE)
(74) Representative: Dehns

(57) **Abstract**

The disclosure provides a method (100) for identifying objects and determining their trajectories, including: analysing an image frame to identify an object (102); creating a bounding box around the object (103); filtering event data based on the position of the bounding box (105); and analysing the filtered event data to determine a trajectory of the object (106).

## Description

### Technical Field

This disclosure relates to the identification of an object and determination of its trajectory using a combination of images of the object and event data for the object.

### Background

In certain applications, it is important to identify one or more object(s) and determine the trajectory of each object. In aerospace applications, for example, this may be an important input for software such as auto-taxi software used for automating the taxiing of aircraft on a runway. In this application, trajectory information may be used to prevent collisions between taxiing aircraft and objects on the runway. Objects on the runway could include, for example, other aircraft, airport vehicles, movable airport infrastructure (e.g. aircraft stairs, baggage handling equipment or the like), drones (e.g. unauthorised drones), general detritus, animals, people (e.g. personnel or intruders) or the like.

Existing systems for object identification and trajectory determination may perform well when identifying an object or when determining an object's trajectory, but rarely perform well at both tasks. By way of example, systems that use RGB images, such as those captured using RGB (e.g. photographic or videographic) cameras, may identify objects with a relatively high degree of accuracy. However, these systems tend to perform relatively poorly when used to determine an object's trajectory.

### Summary

According to a first aspect, the disclosure provides a method for identifying objects and determining their trajectories, comprising: analysing an image frame to identify an object; creating a bounding box around the object; filtering event data based on the position of the bounding box so as to have filtered event data for the object; and analysing the filtered event data to determine a trajectory of the object.

The bounding box around the object may have any number of edges. By way of example, the bounding box could be a circle having only a single edge, the bounding box could have a triangular shape with three edges, or the bounding box could be a substantially square with four edges. Thus, the use of the term box in this context is not limited to a bounding box with four edges.

The bounding box may be substantially around the object, but is not limited to excluding the entirety of the object, nor is it limited to including only the object. For example, the bounding box may be slightly larger than the object or slightly smaller than the object.

The image frame may, for example, be a photographic image frame (e.g. captured using a photographic camera), a videographic image frame (e.g. captured using a video camera) or the like. In some examples, the image frame is an RGB image frame. In some examples, the method comprises capturing the photographic image (e.g. using a photographic camera, video camera or the like). In other examples, the method may comprise receiving the image frame as an input from an external source, analysing a stored image frame or the like. Thus, the method is not limited to capturing the image frame or receiving the image frame from an external source.

In some examples, the method comprises capturing the event data (e.g. with an event camera). Event data may include data relating to one or more events. Such data may be captured, for example, using an event camera. Some examples of event cameras include neuromorphic cameras, silicon retina cameras and dynamic vision sensors. In other examples, the method may comprise receiving the event data as an input from an external source, analysing stored event data or the like. Thus, the method is not limited to capturing the event data or receiving the event data from an external source.

It will be understood that the object is present in both the event data and the image frame. By way of example, the event data may have (e.g. substantially) the same field of view as the image frame. In some examples, a field of view of the event data may at least partially overlap with a field of view of the image frame. In some examples, a field of view of the event data may be a subset of a field of view of the image frame or vice-versa. If the relationship between a field of view the event data and the image frame is known, it may be possible to calibrate both fields of view so as to determine the event data corresponding to the position of the bounding box.

Event data may include data for one or more events. An event may, for example, correspond to a change in light intensity (e.g. brightness), for example a change of light intensity greater than a threshold amount. Event data for each event may include, for example, the time of the event, the position of the event, e.g. the co-ordinates of the event, and/or the polarity of the change in light intensity (e.g. increase or decrease).

A change in light intensity may be defined with respect to a reference light intensity. The reference light intensity may change each time an event occurs. By way of example, the reference light intensity may be changed to its current intensity when an event occurs. Thus, in such an example, another event may be captured following a subsequent change in light intensity.

An event may correspond to a change in light intensity of a pixel, a group of pixels or the like. Similarly, in examples where a change in light intensity is defined with respect to a reference light intensity, the reference light intensity may be for the pixel, group of pixels or the like.

Filtering event data based on the position of the bounding box may include, for example, excluding event data (e.g. one or more events) not (e.g. substantially) within the bounding box. By way of example, once the bounding box has been created around the object, any subsequent events that occur (e.g. substantially) outside of the bounding box may be excluded such that only events that occur (e.g. substantially) within the bounding box are considered in the determination of the object's trajectory. Thus, the event data may be filtered by selecting event data (e.g. one or more events) that are (e.g. substantially) within the bounding box.

In some examples, the event data is asynchronous. Events may occur asynchronously, i.e. at any point in time rather than at discrete synchronous (e.g. regular) time intervals. Hence, by way of example, event data may be captured or otherwise provided as an input asynchronously as events occur.

In some examples, filtering event data based on the position of the bounding box is performed in an synchronous manner. By way of example, the event data (e.g. data relating to one or more events) may be filtered synchronously (e.g. at discrete time intervals between which data for each event is captured or otherwise provided as an input). When the event data is filtered, a, e.g. asynchronous, time associated with each event may be retained, e.g. independently of the synchronous time at which the event data is filtered.

In some examples, analysing the filtered event data to determine a trajectory of the object is performed in an asynchronous manner. By way of example, the filtered event data may be analysed asynchronously (e.g. as it is filtered), rather than at synchronous time intervals.

In some examples, analysing the filtered event data to determine a trajectory of the object comprises using a spiking neural network. Spiking neural networks are a type of neural network that is particularly well suited to handling asynchronous inputs to provide asynchronous outputs.

Spiking Neural Networks may include types of artificial neural network that mimic the operation of biological neurons, e.g. more closely than traditional artificial neural networks. Spiking neural networks may incorporate the concept of time into their operating model, e.g. by having neurons in the network arranged to communicate by sending discrete spikes, i.e. impulses, at specific points in time. This spiking mechanism may allow Spiking Neural Networks to process information in a dynamic and temporally precise manner. This may make spiking neural networks appropriate for tasks that involve time-based data, such as video processing.

In some examples, the method comprises analysing a second image frame to identify the object; creating a second bounding box; filtering event data based on the position of the second bounding box so as to have filtered event data for the object for the second image frame; and analysing the filtered event data for the second image frame to determine a trajectory of the object. Thus, it may be possible to track objects by analysing successive image frames and creating a new bounding box for the object for each frame. Filtering of the event data captured between frames may, therefore, be based on the position of the most recent bounding box.

It will be understood that the second image frame may correspond to (e.g. substantially) the same image as the first image frame and may be at a time after (e.g. immediately) after the first image frame.

Image frames are synchronous, i.e. they are captured at discrete points in time (and optionally at regular time intervals). Thus, the position of an object may be updated synchronously at discrete time intervals, while the trajectory is updated asynchronously, e.g. between image frames as event data is captured or otherwise provided as an input.

In some examples, between the analysing of the first image frame and the second image frame: filtering the event data is based on the position of the first bounding box; and the filtered event data for the first image frame is analysed to determine the trajectory of the object.

In some examples, after analysing of the second image frame: filtering the event data is based on the position of the second bounding box; and the filtered event data for the second image frame is analysed to determine the trajectory of the object.

In some examples, analysing the image frame to identify an object comprises using a convolutional neural network. In some examples, a convolutional neural network may be used in combination with a suitable computer vision algorithm to analyse the image frame to identify the object.

Convolutional Neural Networks may include deep neural networks, primarily used in processing data with a grid-like topology, such as images or other n-dimensional representations. Convolutional Neural Networks may use convolutional layers to automatically and/or adaptively learn spatial hierarchies of features from input images. These features may be learned through filters that detect specific aspects of the image, such as edges or textures. This may be followed by pooling layers, used to reduce dimensionality, and/or fully connected layers used for classification or regression tasks.

Convolutional Neural Networks may run synchronously, at discrete time intervals. Conversely, Spiking Neural Networks may process asynchronous spikes, or events, whenever these occur. By way of example, Convolutional Neural Networks may have non-temporal, static, neuron activation functions. Spiking Neural Networks may have dynamic, e.g. threshold-triggered, spiking mechanisms.

In some examples, creating a bounding box around the object comprises using a convolutional neural network.

In some examples, analysing the image frame further comprises classifying the object into one of a plurality of particular (e.g. predefined) classes. For example, in aerospace applications, the method may comprise classifying the object into one (or more) of the following classes: aircraft, airport vehicles, movable airport infrastructure (e.g. aircraft stairs, baggage handling equipment or the like), drones (e.g. unauthorised drones), general detritus, animals, people (e.g. personnel or intruders) or the like. Analysing the image frame to classify the object may comprise using a convolutional neural network.

In some examples, two or more of the following steps comprise using the same convolutional neural network: analysing the image frame to identify the object; creating a bounding box around the object; and analysing the image frame to classify the object.

In some examples, the method includes providing a position of the object as an output. For instance, the method may comprise locating a position of the object. By way of example, the steps of identifying the object and/or creating the bounding box around the object may include locating the position of the object. The position of the object could include, for example, a centre of the object (e.g. a centre of the bounding box), the bounding box around the object (e.g. the position, size and/or shape of the bounding box) or the like.

In some examples, the method comprises providing the trajectory of the object as an output. The trajectory of an object may include information such as the object's position, speed, velocity, acceleration, jerk or the like.

In some examples, the method comprises analysing the trajectory of the object so as to avoid a collision between, e.g., an aircraft or any other vehicle (e.g. a car, a boat or the like) and the object. For example, in aerospace applications the trajectory may be provided to auto-taxi software, used for automating the taxiing of aircraft on a runway, in order to prevent collisions between taxiing aircraft and objects on the runway.

In some examples, the steps of the method may be performed so as to analyse the image frame to identify a plurality of objects. The method may include, for example, creating a bounding box around each of the plurality of objects, filtering event data based on the position of each bounding box so as to have filtered event data for each object and/or analysing the filtered event data for each object to determine a trajectory of each object. Any of the optional steps of the method may be performed (e.g. in combination) on each of the plurality of objects.

The disclosure also provides a system for identifying objects and determining their trajectories, comprising: an object identification module arranged to analyse an image frame to identify an object and create a bounding box around the object; an event data segmentation module arranged to filter event data based on the position of the bounding box so as to have filtered event data for the object; and a trajectory estimation module arranged to analyse the filtered event data to determine a trajectory of the object.

### Brief Description of Drawings

One or more non-limiting examples will now be described, by way of example only, and with reference to the accompanying figures in which:
Figure 1 shows a method of identifying an object and determining its trajectory; and
Figure 2 shows a system for identifying an object and determining its trajectory, which may be arranged to perform the method of Figure 1.

### Detailed Description

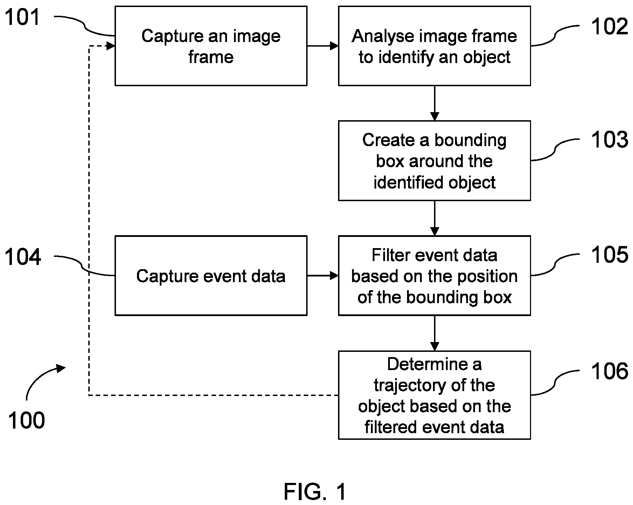

Figure 1 shows a method 100 of identifying an object and determining its trajectory.

The method 100 includes a first step 101 of capturing an image frame, e.g. an RGB image frame. The image frame may be captured, for example, by an RGB camera such as a photographic camera, a video camera or the like. In some examples, the image frame may instead be received from an external source (e.g. an external RGB camera), retrieved from computer storage or the like.

The method 100 includes a second step 102 of analysing the image frame to identify an object. In this example, identification of the object includes using a convolutional neural network. Any suitable convolutional neural network could be used to identify the object, such as Faster R-CNN, Mask R-CNN or the like. In this example, the convolutional neural network uses the you only look once (YOLO) computer vision algorithm for object identification; however, in other examples any suitable computer vision algorithm may be used.

The step 102 of identifying the object may also include the step of classifying the object. In aerospace applications, for example, possible classes that the object could be classified into may include aircraft, airport vehicles, movable airport infrastructure (e.g. aircraft stairs, baggage handling equipment or the like), drones (e.g. unauthorised drones), general detritus, animals, people (e.g. personnel or intruders) or the like.

Classification could be performed, for example, using a convolutional neural network, such as any of those previously mentioned. In examples where a convolutional neural network is used for object identification, the same convolutional neural network could be used for object classification. In this example, the convolutional neural network uses the YOLO computer vision algorithm for object classification; however, in other examples any suitable computer vision algorithm may be used.

The method 100 includes a third step 103 of creating a bounding box around the object identified in the second step 102 of the method 100. Creation of the bounding box may be performed, for example, using a convolutional neural network, such as those mentioned previously. If a convolutional neural network is used for this step 103, the convolutional neural network could use the YOLO computer vision algorithm for bounding box creation; however, any suitable computer vision algorithm may be used to perform this step. Hence, the same convolutional neural network, e.g. the same computer vision algorithm, could be used for two or more of object identification, object classification and/or bounding box creation.

As the second step 102 and the third step 103 of the method 100 use an (e.g. RGB) image frame to identify the object and create a bounding box around it, these steps may be performed with a relatively high degree of accuracy, e.g. compared with using event data for such tasks.

In this example, the method 100 includes a fourth step 104 of capturing event data for the same object as captured in the image frame. As per the image frame, in other examples this event data may be received from an external source, retrieved from storage or the like. Event data may be captured, for example, using an event camera.

An event camera, for example a neuromorphic camera, silicon retina or dynamic vision sensor, is an imaging sensor that responds to changes in light intensity. Unlike photographic cameras, event cameras may operate asynchronously, outputting events corresponding to changes in light intensity as they occur, rather than synchronously at discrete, e.g. regular, time intervals.

Changes in light intensity may correspond to the movement of an object. By way of example, a decrease in the brightness of a pixel may correspond to the absence of an object that was previously present within the pixel. Similarly, for example, an increase in brightness of a pixel may indicate the presence of an object not previously present within the pixel. Thus, analysis of event data may be used to determine an object's trajectory with a high degree of accuracy and in real-time.

However, event data may not be as well suited for object identification. Given that event data may provide only a location and a polarity of an event, it may be difficult to correctly associate an event with, e.g., an object, another object or the background. Furthermore, as events only occur in response to a change in light intensity, identification of stationary objects may be particularly difficult. Unlike (e.g. RGB) image frames, the information provided by event data may not be sufficient to classify objects.

The method 100 includes a fifth step 105 of filtering the event data based on the position of the bounding box. In this example, the fifth step 105 includes identifying the relevant event data for the bounding box by determining which event data is located within the bounding box, and filtering out event data that does not fall within the bounding box.

As the field of view of the event data may differ from the field of view of the image frame, it may be necessary to correlate the position of the bounding box in the image frame with the position of the bounding box in the event data. This may be achieved by performing a calibration process to correlate corresponding positions between the two fields of view.

Once relevant event data is identified, only this event data (e.g. event data within the bounding box) is considered in subsequent steps of the method 100 to determine the trajectory of the object.

The method 100 includes a sixth step 106 of determining the trajectory of the object based on the relevant, filtered, event data from the fifth step 105 of the method. Hence, it is possible to identify and classify objects using an (e.g. RGB) image frame, while determination of the object's trajectory may be achieved using event data.

Processing of event data to determine the object's trajectory may be performed, for example, using a spiking neural network. Spiking neural networks are designed to receive asynchronous data, such as asynchronous event data, to produce an asynchronous output. Thus, the trajectory of each object may be updated in real time (e.g. as each event occurs) to a high degree of accuracy.

As the event data is filtered prior to the sixth step 106, the sixth step 106 of determining the trajectory of the object is performed using only the relevant event data for the object. This may reduce the amount of processing power required to determine the trajectory of the object when compared with the amount of processing power required to process all of the event data. This process may also more accurately define which event data is relevant in order to determine the object's trajectory, hence a more accurate result may be achieved.

The output of the sixth step 106 of the method 100 of Figure 1 is an identified and classified object having an associated position and trajectory. This position, trajectory and classification may be used, for example, in aerospace applications. As previously mentioned this type of information may, for example, be a useful input for auto-taxi software, for automating the taxiing of aircraft on a runway, in order to prevent collisions between taxiing aircraft and objects on the runway.

In certain examples, it may also be possible to track objects using the method 100 shown in Figure 1.

When the method 100 is used to track an object, the position of the object, and its respective bounding box, may be updated over time. In this example, this is achieved by repeating the first step 101 of capturing an image frame at a certain rate, for example a rate of 30Hz, 60Hz, etc..

As each image frame is captured, the second 102 and the third 103 steps of the method 100 are performed on each successive image frame to identify the new position of the object and re-create the bounding box around it. This process may occur at approximately the frame rate of image capture.

As the position of the bounding box around the object is changed, the event data is filtered based on the latest, i.e. most recent, position of the bounding box by repeating the fifth step 105 of the method 100 each time a new bounding box is created for the object. This may help to ensure that the trajectory of the object, determined by continuing to perform the sixth step 106 of the method 100, continues to be accurate as the object moves.

When tracking an object, the position of the object from the previous image frame and trajectory data for the object may be used as an input, to help identify the object when repeating the second step 102 of the method 100 for a subsequent image frame. This may improve the accuracy and/or increase the processing speed of the second step 102 of the method 100, e.g. by identifying regions of interest where objects are expected to be, based on their previous locations and trajectories. Such regions of interest may, for example, be analysed first and/or other regions outside of the regions of interest may not be considered when analysing the subsequent image frame to identify the object's new position.

While this method is explained with respect to identification and trajectory determination of a singular object, it will be apparent that the method may be performed so as to identify a plurality of objects (e.g. simultaneously) and determine each of their trajectories by performing this method (e.g. simultaneously) on a plurality of objects (e.g. within the same image frame).

As will be appreciated from the explanation of the method 100 of Figure 1, such a method of identifying objects and determining their trajectories may benefit from the advantages of analysing (e.g. RGB) image frames to identify and classify objects in combination with the advantages of analysing event data to identify the trajectories of the identified objects. Thus, the method 100 shown in Figure 1 may enable more accurate identification of objects and determination of their trajectories than existing methods. Such a method, using multi-modal imaging processes, may also be more robust to variation in lighting and/or weather conditions. Further, such a method may enable large amounts of data to processed and managed more efficiently than existing methods.

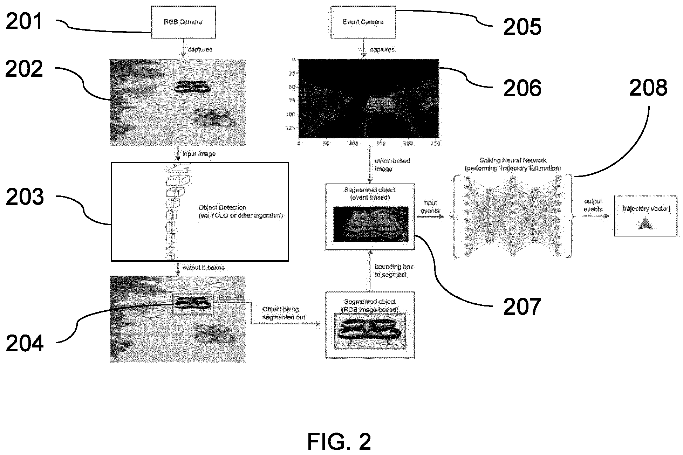

Figure 2 shows a system for identifying an object and determining its trajectory, for example by performing the method 100 of Figure 1.

Figure 2 shows an example of an image frame 202, such as an image frame that may be captured in the first step 101 of the method 100 shown in Figure 1. In this example, the system includes an RGB camera 201 that is used to capture the image frame 202. In other examples, capture of the image frame 202 may happen externally to the system used to identify the object captured within the image frame 202 and determine its trajectory.

The system shown in Figure 2 also includes an object identification module 203. This object identification module 203 receives the image frame 202 as an input and identifies an object within the image. The object identification module 203 may also, for example, classify the object identified within the image frame 202. The object identification module 203 may, for example, perform the second step 102 and/or the third 103 step of the method 100 of Figure 1.

In this example, the object identification module 203 creates a bounding box around the object that it identifies. An example of this can be seen in Figure 2, where a drone has been identified within the image frame 202 and a bounding box 204 has been created around the drone. In this example, the drone has also been classified into the class "drone", and a corresponding label has been added to the bounding box 204.

In this example, the system also includes an event camera 205. The event camera 205 captures event data 206. The field of view of the event data 206 in this example is similar to (e.g. substantially the same as) the field of view of the image frame 202. As will be apparent, the event camera 205 may perform the fourth step 104 of the method 100 of Figure 1.

The event data 206 includes certain pixels that indicate an increase in light intensity and certain other pixels which indicate a decrease in light intensity. An increase in light intensity may indicate that an object has moved into the pixel, whereas a decrease in light intensity may indicate that an object is no longer present within that pixel. While in this example the system includes the event camera 205, in other examples the event data 206 may be received from an external source. In Figure 2, the polarity of the change in light intensity (increase or decrease) is indicated by the colour of the pixels.

The system shown in Figure 2 includes an event data segmentation module 207. The event data segmentation module 207 in this example is arranged to filter the event data 206 associated with the object by excluding event data that is not within the bounding box 204 created by the object identification module 203. As will be apparent, the event data segmentation module 207 may be arranged to perform the fifth step 105 of the method 100 of Figure 1.

In Figure 2, it can be seen that a segment of the event data 206 has been taken corresponding to the position on the event image 206 that corresponds with the position of the drone, and its corresponding bounding box 204.

In this example, the drone is moving upwards. This is indicated by the filtered event data, which includes various pixels having an increase in light intensity towards the top of the filtered event data and various other pixels having a decrease in light intensity towards the bottom of the filtered event data.

The system also includes a trajectory estimate module 208, which in this example includes a spiking neural network. The segmented event data is provided as an input to the trajectory estimation module 208 in order to determine a trajectory of the object. Thus, an object having a position and a classification, is identified and assigned an associated trajectory. The trajectory estimation module may include a tensor processing unit (TPU) which is an example of a suitable type of processing unit for running spiking neural networks.

As previously mentioned, the RGB camera 201 may operate at a certain frame-rate and thus the system may be used to track objects by repeating the object identification, bounding box creation and trajectory determination process in a similar manner to the manner as outlined in the description of the method 100 of Figure 1.

Object identification and creation of bounding boxes around objects may occur at approximately the frame rate of the RGB camera 201. The event camera 205 may capture changes in light intensity, i.e. events, asynchronously (e.g. between frames) as the events occur. Thus, the event data 206 may be asynchronous. The trajectory estimation module 208 may also operate asynchronously so as to update the trajectory of the object as events occur in real-time, while the position of the object may be updated from image frame to image frame (e.g. in discrete time intervals). Typically, updating the position of the object at the frame rate of the RGB camera is sufficient for most applications, including collision avoidance in aerospace applications.

The position and/or trajectory information may be provided as an input to the object identification module 203 when used to track objects so as to improve the accuracy of the object identification and/or bounding box creation process, for example this may occur in a similar manner as described with reference to the method 100 of Figure 1. For instance, regions of interest, where an object may be expected to be, may be identified within subsequent image frames given the object's position in a previous image frame and its trajectory. These regions of interest may be used to aid in analysis of the subsequent image frame.

The benefits of using the system of Figure 2 may be similar to the benefits associated with the method 100 of Figure 1. For example, the system of Figure 2 may benefit from the advantages of using photographic data for object identification and classification, in addition to the advantages of using event data for trajectory determination.

## Claims

1. A method for identifying objects and determining their trajectories, comprising:
analysing an image frame to identify an object;
creating a bounding box around the object;
filtering event data based on the position of the bounding box so as to have filtered event data for the object;
analysing the filtered event data to determine a trajectory of the object.

2. The method as claimed in claim 1, wherein filtering event data based on the position of the bounding box is performed in a synchronous manner.

3. The method as claimed in claim 1 or claim 2, wherein analysing the filtered event data to determine a trajectory of the object is performed in an asynchronous manner.

4. The method as claimed in any one of the preceding claims, wherein analysing the filtered event data to determine the trajectory of the object comprises using a spiking neural network.

5. The method as claimed in any one of the preceding claims, comprising analysing a second image frame to identify the object;
creating a second bounding box around the object;
filtering event data based on the position of the second bounding box so as to have filtered event data for the object for the second image frame; and
analysing the filtered event data for the second image frame to determine the trajectory of the object.

6. The method as claimed in claim 5, wherein between the analysing of the first image frame and the second image frame:
filtering the event data is based on the position of the first bounding box; and
the filtered event data for the first image frame is analysed to determine the trajectory of the object.

7. The method as claimed in claim 5 or 6, wherein after the analysing of the second image frame:
filtering the event data is based on the position of the second bounding box; and
the filtered event data for the second image frame is analyse to determine the trajectory of the object.

8. The method as claimed in any one of the preceding claims, wherein analysing the image frame to identify the object comprises using a convolutional neural network.

9. The method as claimed in any one of the preceding claims, wherein analysing the image frame comprises classifying the object into one of a plurality of particular classes.

10. The method as claimed in any one of the preceding claims, comprising analysing the trajectory of the object so as to avoid a collision between an aircraft and the object.

11. The method as claimed in any one of the preceding claims, wherein the event data includes data for one or more events;
wherein the one or more events corresponds to a change in light intensity; and
wherein the event data includes one or more of:
a time of the event;
a position of the event; and
a polarity of the change in light intensity.

12. The method as claimed in any one of the preceding claims, wherein the event data includes data for one or more events; and
filtering event data based on the position of the bounding box comprises excluding events not substantially within the bounding box.

13. A system for identifying objects and determining their trajectories, comprising:
an object identification module arranged to analyse an image frame to identify an object and create a bounding box around the object;
an event data segmentation module arranged to filter event data based on the position of the bounding box so as to have filtered event data for the object; and
a trajectory estimation module arranged to analyse the filtered event data to determine a trajectory of the object.

14. A system as claimed in claim 13, comprising an event camera arranged to capture the event data.

15. A system as claimed in claim 13 or 14, comprising a RGB camera arranged to capture the image frame.
